(19) **Europäisches Patentamt / European Patent Office / Office européen des brevets**

(11) **EP 3 276 733 B1**

(12) **EUROPEAN PATENT SPECIFICATION**

(45) Date of publication and mention
of the grant of the patent:
**18.01.2023   Bulletin 2023/03**

(21) Application number: **16768894.4**

(22) Date of filing: **24.03.2016**

(51) International Patent Classification (IPC):
***H01M 50/414*** *(2021.01)*

(52) Cooperative Patent Classification (CPC):
**H01M 10/0525; B60L 50/64; H01M 4/131;**
**H01M 4/133; H01M 4/134; H01M 4/364;**
**H01M 4/38; H01M 4/48; H01M 4/587;**
**H01M 10/058; H01M 50/414; H01M 50/423;**
**H01M 50/491;** H01M 4/386; H01M 50/443;   (Cont.)

(86) International application number:
**PCT/JP2016/059445**

(87) International publication number:
**WO 2016/152991 (29.09.2016 Gazette 2016/39)**

(54) **HIGH-SAFETY/HIGH-ENERGY-DENSITY CELL**

ZELLE MIT HOHER SICHERHEIT/ENERGIEDICHTE

CELLULE HAUTE-SÉCURITÉ/HAUTE-DENSITÉ D'ÉNERGIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.03.2015   JP 2015061773**

(43) Date of publication of application:
**31.01.2018   Bulletin 2018/05**

(73) Proprietor: **NEC Corporation**
**Tokyo 108-8001 (JP)**

(72) Inventors:
• **INOUE, Kazuhiko**
**Tokyo 108-8001 (JP)**
• **SHIMURA, Kenichi**
**Tokyo 108-8001 (JP)**
• **KAWASAKI, Daisuke**
**Tokyo 108-8001 (JP)**

• **YOSHIDA, Noboru**
**Tokyo 108-8001 (JP)**

(74) Representative: **Vossius & Partner**
**Patentanwälte Rechtsanwälte mbB**
**Siebertstrasse 3**
**81675 München (DE)**

(56) References cited:
**JP-A- 2007 305 574      JP-A- 2007 305 574**
**JP-A- 2009 037 944      JP-A- 2011 228 052**
**JP-A- 2014 103 087      JP-A- 2014 240 189**
**US-A1- 2011 159 347     US-A1- 2014 030 595**

(52) Cooperative Patent Classification (CPC): (Cont.)
H01M 50/489; Y02E 60/10; Y02P 70/50;
Y02T 10/70

**Description**

Technical Field

The present invention relates to a lithium ion secondary battery, a method for manufacturing the same, a vehicle using the lithium ion secondary battery, and a power storage system.

Background Art

Lithium ion secondary batteries are characterized by their small size and large capacity and are widely used as power sources for electronic devices such as mobile phones and notebook computers, and have contributed to the improvement of the convenience of portable IT devices. In recent years, attention has also been drawn to the use in large-sized applications such as drive power supplies for motorcycles and automobiles, and storage batteries for smart grids. As the demand for lithium ion secondary batteries has increased and they are used in various fields, batteries have been required to have characteristics, such as further higher energy density, lifetime characteristics that can withstand long-term use, and usability under a wide range of temperature conditions.

In general, carbon-based materials have been used in a negative electrode of a lithium-ion secondary battery, but in order to increase the energy density of the battery, the use of metallic materials such as silicon, tin and the like having a large capacity of absorbing and desorbing lithium ions per unit volume has been studied for a negative electrode. However, the metallic material deteriorates due to expansion and contraction that are repeated by charging and discharging lithium, and therefore have a problem in the cycle characteristics of the battery.

Various proposals have been made to improve cycle characteristics of a lithium ion secondary battery using the metallic material in a negative electrode. Patent Document 1 discloses a method of improving the charge and discharge cycle life of a nonaqueous electrolyte secondary battery by mixing silicon oxide with elemental silicon and further covering its periphery with amorphous carbon to relax the expansion and contraction of the electrode active material itself. Patent Document 2 discloses that, by specifying the size ratio of silicon oxide particles and graphite particles in a negative electrode comprising silicon oxide and graphite, the silicon oxide particles are disposed within spaces formed by graphite particles to suppress the change in the volume of the entire negative electrode even when the silicon oxide expands, and thus, the deterioration of the cycle characteristics can be suppressed.

Patent Document 3 relates to a lithium ion secondary battery comprising a positive electrode, a negative electrode, a separator and a nonaqueous electrolyte, wherein the positive electrode is provided with a positive electrode material mixture layer containing a positive electrode active material, the positive electrode material mixture layer has a volume density Vc of 62 vol. % or more and a capacity per unit area of 2 mAh/cm$^2$ or more, the negative electrode is provided with a negative electrode material mixture layer containing a negative electrode active material, the negative electrode material mixture layer has a volume density Va of 62 vol. % or more and a capacity per unit area of 2.5 mAh/cm$^2$ or more, the separator has an air permeance of 200 sec./ 100 mL or less, the air permeance being determined by the Gurley method.

Patent Document 4 relates to a lithium ion secondary battery having an electrode provided with an active material layer on a current collector and a separator, wherein the active material layer and the separator both contain an aromatic polyamide.

Patent Document 5 discloses a battery including a wound body having a laminated structure of a positive electrode, a negative electrode, and a separator provided therebetween.

Patent Document 6 describes a separator for a lithium secondary battery, comprising a porous film including a polyolefin layer; and a lubricant layer disposed on a surface of the porous film, the lubricant layer including a particulate substance and having a three-dimensional surface roughness of 0.15 to 1.45 μm.

Citation List

Patent Document

Patent Document 1: Japanese Patent Laid-Open Publication No. 2008-153117
Patent Document 2: Japanese Patent Laid-Open Publication No. 2013-101921
Patent Document 3: US2014030595A1
Patent Document 4: JP2007305574A
Patent Document 5: JP2009037944A
Patent Document 6: US2011159347 A1

Summary of Invention

Technical Problem

The lithium ion secondary battery described in the above-mentioned prior art documents achieves improvement in cycle characteristics by suppressing expansion and contraction of the entire negative electrode containing a carbon material and a metal material. However, the metal material itself has a problem that it deteriorates due to expansion and contraction that are repeated by charging and discharging. When the metal material loses its ability to accept lithium due to its deterioration, in addition to deterioration of cycle characteristics, there has been a possibility that lithium precipitates on the negative electrode and grows to the extent that it reaches the positive electrode to form short-circuiting, whereby safety of the lithium ion secondary battery is impaired. In particular, the lithium precipitation tends to occur when the acceptable amount of lithium in the negative electrode becomes smaller than the releasable amount of lithium from the positive electrode due to deterioration of the metal material, and the higher the capacity of the positive electrode is, the larger the amount of precipitated lithium occur, leading to the concern for safety. For this reason, in a lithium ion secondary battery having high capacity, in order to prepare for deterioration of the metallic material of the negative electrode, the acceptable amount of lithium in a carbon material in the negative electrode must be designed to be larger than the releasable amount of lithium from the positive electrode active material, and therefore, there is a problem that the use of a high capacity metal material is restricted.

An object of the present invention is to provide a lithium ion secondary battery with high safety and high energy density, which solves the above problem, i.e. the concern about the safety when the acceptable amount of lithium in the carbon material of the negative electrode is smaller than the releasable amount of lithium in the positive electrode active material in the lithium ion secondary battery with high energy density.

Solution to Problem

The lithium ion secondary battery of the present invention is as defined in the claims.

According to the present invention, there is provided a lithium ion secondary battery with high safety and high energy density even if the acceptable amount of lithium in the negative electrode carbon material is smaller than the releasable amount of lithium from the positive electrode active material.

Brief Description of Drawing

Fig. 1 is a schematic view of a laminate type lithium ion secondary battery according to one embodiment of the present invention.
Fig. 2 is an exploded perspective view showing a basic structure of a film package battery.
Fig. 3 is a cross-sectional view schematically showing a cross section of the battery of Fig. 2.

Description of Embodiments

Embodiments of the present invention will be described for each constituting member of the lithium ion secondary battery.

<Separator>

A separator used in the present invention has a thermal shrinkage coefficient of less than 3% in an electrolyte solution at its boiling point. The shrinkage coefficient of the separator at the boiling point in the electrolyte solution may be measured by thermal mechanical analysis (TMA), but since the shrinkage coefficient, especially around the melting point, cannot be accurately measured due to the load applied to the separator, it may be measured by disposing a stack of a positive electrode (120 mm × 120 mm), a separator (100 mm × 100 mm) and a negative electrode (120 mm × 120 mm) in this order between two glass plates (150 mm × 150 mm × 5 mm) having a gap of 1 mm and leaving it in an oven adjusted to the boiling point of the electrolyte solution for 1 hour. That is, the thermal shrinkage coefficient (S) is a percentage of the dimensional change (Lo - L) to the initial value ($L_0$) in the longitudinal direction or the lateral direction, and is calculated by the following equation.

$$S = (L_0 - L) / L_0 \times 100$$

Further, heating it to 400 °C, the thickness of the separator was measured to use as an index of the insulation property under high temperature. That is, the thickness (Ts) of the insulating layer at 400 °C is calculated using the thickness (Tc) of the positive electrode, the thickness (Ta) of the negative electrode, and the total thickness (T).

$$Ts = T - Ta - Tc$$

When the negative electrode deteriorates and the acceptable amount of lithium in the negative electrode becomes smaller than the releasable amount of lithium from the positive electrode, precipitation of lithium occurs to lower the insulating property of the separator and the possibility of a minute short circuit is increased. Even with a minute short circuit, the interior of the battery generates heat. Even in this case, however, if the melting point of the separator is higher than the boiling point of the electrolyte solution and the thermal shrinkage coefficient in the electrolyte solution at its boiling point is less than 3%, the separator does not melt and deform. Therefore, the separator maintains the function of preventing the contact between the positive electrode and the negative electrode, and thus, the complete short circuit can be prevented. If the positive electrode and the negative electrode are brought into contact with each other due to heat shrinking of the separator and a complete short circuit occurs, there is a possibility that thermal runaway of the battery may happen, causing a serious risk, such as emission of smoke, ignition, or burst. Particularly, in batteries having a high energy density, such as those having a charge capacity per unit area of 3 mAh/cm$^2$ or more, precipitation of lithium is likely to occur, so that the risk of heat generation due to a micro short circuit increases. When the electrolyte solution completely evaporates and is discharged to the outside of the battery by this heat, the battery loses its function. However, if the thermal shrinkage coefficient of the separator in the electrolyte solution at its boiling point is less than 3%, it is possible to avoid the danger of direct contact between the electrodes, so that safety can be secured.

When heat generation due to a short circuit causes a chemical reaction between the electrolyte solution and the negative electrode or the positive electrode, the amount of heat generation is large and the temperature inside the battery may exceed the boiling point of the electrolyte solution locally. Therefore, the separator more preferably has a thermal shrinkage coefficient of less than 3% at 200 °C in the air, further more preferably has a thermal shrinkage coefficient of less than 3% at 250 °C in the air, and most preferably has a thermal shrinkage coefficient of less than 3% at 300 °C in the air.

In the case of a separator made from a resin, stretching is often carried out when producing a film. Therefore, even though the resin itself expands upon heating, the strain due to stretching is relaxed and shrinkage occurs at a temperature higher than the glass transition point, particularly around the melting point. Although the separator functions to maintain insulation between the electrodes, if the separator shrinks, the insulation is no longer maintained, and a short circuit takes place in the battery, resulting in a dangerous state. Compared with a wound type battery, in the case of a stacked battery, since the force of sandwiching the separator between the electrodes is weak, thermal shrinkage relatively easily occurs and a short circuit occurs. The separator is designed to be larger than the electrode in preparation for some misalignment or shrinkage, but if it is too large, the energy density of the battery will be lowered, so it is preferable to keep it to a margin of a few percent. Therefore, when the thermal shrinkage of the separator exceeds 3%, there is a high possibility that the separator becomes smaller than the electrode. The boiling point of the electrolyte solution constituting the battery depends on the solvent to be used, and it is 100 °C to 200 °C. If the shrinking is less than 3% at the boiling point, the electrolyte solution volatilizes and is discharged to the outside of the system of the battery to shut off the ion conduction between the electrodes and the function of the battery is lost. Therefore, the risk of ignition is low even if heat generation occurs, for example, by overcharge. In contrast, when the shrinkage coefficient of the separator is 3% or more, the separator shrinks before the electrolyte solution is completely discharged to the outside of the system and a short circuit occurs between the electrodes, so a sudden discharge occurs. Particularly, when the battery capacity is large, the amount of heat generated by the discharge due to the short circuit is large, and the risk of ignition increases.

The thermal shrinkage coefficient varies depending on the conditions in the process of preparing the separator, such as stretching conditions, but as the material of the separator having a low thermal shrinkage coefficient even under high temperature such as the boiling point of the electrolyte solution, it is preferable to use a heat resistant resin having a melting point higher than the boiling point of the electrolyte solution. Specific examples thereof include resins such as polyimides, polyamides, polyphenylene sulfides, polyphenylene oxide, polybutyleneterephthalate, polyetherimides, polyacetal, polytetrafluoroethylene, polychlorotrifluoroethylene, polyamideimides, polyvinylidene fluoride, polyvinylidene chloride, polyvinyl alcohol, phenol resins, urea resins, melamine resins, urethane resins, epoxy resins, cellulose, polystyrene, polypropylene, polyethylene naphthalate and the like. In order to enhance the insulation property of the separator, the separator may be coated with an insulator such as ceramics, or the separator may be laminated with layers made of different materials, but it is required that the thermal shrinkage coefficient is less than 3% over the entire separator in the electrolyte solution at its boiling point.

The separator according to the present invention is made of one or more kinds of resins selected from polyphenylene sulfides, polyimides and polyamides because it does not melt even at high temperature and the thermal shrinkage coefficient is low. These separators using a resin having a high melting point have a low thermal shrinkage coefficient. For example, a separator prepared by polyphenylene sulfide resin (melting point 280 °C) has a shrinkage coefficient at 200 °C of 0%, and a separator prepared by an aramid resin (no melting point and thermally decomposes at 400 °C) has a shrinkage coefficient at 200 °C of 0% and this finally reaches 3% at 300 °C. Further, the separator of a polyimide resin (no melting point, thermally decomposes at 500 °C or higher) has a shrinkage coefficient at 200 °C of 0%, and it is within only about 0.4 % even at 300 °C, and thus it is a preferable example as the separator of the present application. Cellulose has no melting point and the thermal shrinkage coefficient at 200 °C is about 1%. However, when heated for a long time, degradation due to thermal decomposition progresses, and insulation deteriorates, so caution is required. On the contrary, in the case of materials such as polypropylene and polyethylene having a melting point of 200 °C or less, the thermal shrinkage coefficient at 200 °C exceeds 10% even if they have been subjected to heat resistance treatment with inorganic particles or the like.

Particularly preferable materials include aromatic polyamides, so-called aramid resins. Aramid is an aromatic polyamide in which one or more aromatic groups are directly linked by an amide bond. The aromatic group is, for example, a phenylene group, and two aromatic rings may be bonded by oxygen, sulfur or an alkylene group (for example, a methylene group, an ethylene group, a propylene group or the like). These aromatic groups may have a substituent, and examples of the substituent include an alkyl group (for example, a methyl group, an ethyl group, a propyl group, etc.), an alkoxy group (for example, a methoxy group, an ethoxy group, propoxy group, etc.), halogen (such as chloro group) and the like. In particular, those in which some or all of the hydrogen atoms on the aromatic ring are substituted with halogen groups such as fluorine, bromine, chlorine and the like are preferable because they have high oxidation resistance and do not undergo oxidative deterioration with the positive electrode. The aramid used in the present invention may be either para type or meta type. In the present invention, use of a separator made of an aramid resin is particularly preferable, because it does not deteriorate even under high energy density, maintains insulation against lithium precipitation and can prevent perfect short circuit.

Examples of aramids which can be preferably used in the present embodiment include polymetaphenylene isophthalamide, polyparaphenylene terephthalamide, copolyparaphenylene 3,4'-oxydiphenylene terephthalamide and those in which hydrogen(s) on the phenylene group of these is substituted.

In contrast, polyethylene and polypropylene which have been conventionally used in separators for lithium ion batteries shrink under high temperature conditions. For example, polypropylene has a melting point of around 160 °C, and shrinks, for example, by about 5% at 150 °C, and by 90% or more at 200 °C by melting. The polyethylene, which has a lower melting point (130 °C), further shrinks. In a battery having low energy density, if the cooling effect is high and the temperature does not rise so much or the temperature rising rate is slow, there has been no problem even using polyolefin-based separators. In applications to high energy density batteries, however, the polyolefin-based separators are insufficient for safety.

In order to prevent ignition due to thermal runaway of the battery, the separator used in the present invention preferably has an oxygen index of 25 or more. The oxygen index means the minimum oxygen concentration at which a vertically supported small test specimen maintains combustion in a mixed gas of nitrogen and oxygen at room temperature, and a higher value indicates a flame-retardant material. Measurement of the oxygen index can be carried out according to JIS K 7201. Examples of the material used for the separator having an oxygen index of 25 or more include resins such as polyphenylene sulfide, polyphenylene oxide, polyimide, and aramid.

As a form of the separator, any form can be employed, such as fiber assemblies such as a woven fabric or a nonwoven fabric, and a microporous membrane. The separator according to the present invention is a microporous membrane because lithium is not easily precipitated and a short circuit can be suppressed. The smaller the pore size of the surface on the negative electrode side of the separator is, the more the precipitation of lithium can be suppressed. The pore size of the microporous membrane is 0.5 $\mu$m or less, preferably 0.1 $\mu$m or less. Further, due to permeation of the charged substance, the pore size of the surface of the microporous membrane on the negative electrode side is preferably 0.005 $\mu$m or more, more preferably 0.01 $\mu$m or more.

A larger thickness of the separator is preferable in terms of maintaining insulating properties and strength. On the other hand, in order to increase the energy density of the battery, it is preferable that the separator is thin. In order to impart short circuit prevention and heat resistance in the present invention, it is preferable to have a thickness of 3 $\mu$m or more, preferably 5 $\mu$m or more, and more preferably 8 $\mu$m or more, and in order to meet specifications of batteries such as normally required energy density, the thickness is 40 $\mu$m or less, preferably 30 $\mu$m or less, and more preferably 25 $\mu$m or less.

Ts is used as an index showing the insulation property at high temperature. There are voids in the separator, and voids are also present in the electrode mixture layer. The electrode and the separator locally reach 400 °C due to overcharge or the like. Therefore, insulation at 400 °C is important. The resin that melts at 400 °C or less loses the voids in the separator, thereby lowering the insulation performance. In addition, since the separator enters into the voids of the electrode mixture layer, the gap between the electrodes narrows and the insulation performance decreases. The thickness (Ts) of the insulating layer at 400 °C is preferably 3 $\mu$m or more, more preferably 5 $\mu$m or more.

<Negative electrode>

The negative electrode has a structure in which a negative electrode active material is laminated on a current collector as a negative electrode active material layer integrated by a negative electrode binder. The negative electrode active material is a material capable of reversibly absorbing and desorbing lithium ions with charge and discharge.

In the present invention, the negative electrode comprises a metal and/or a metal oxide and a carbon as negative electrode active materials. Examples of the metal include Li, Al, Si, Pb, Sn, In, Bi, Ag, Ba, Ca, Hg, Pd, Pt, Te, Zn, La, and alloys of two or more of these. These metals or alloys may be used in combination of two or more. In addition, these metals or alloys may contain one or more nonmetallic elements.

Examples of the metal oxide include silicon oxide, aluminum oxide, tin oxide, indium oxide, zinc oxide, lithium oxide, and composites of these. In the present embodiment, it is preferable to include tin oxide or silicon oxide, and more preferably silicon oxide, as the negative electrode active material. This is because silicon oxide is relatively stable and hardly causes reaction with other compounds. It is also possible to add one or more elements selected from nitrogen, boron and sulfur to the metal oxide, for example, in an amount of 0.1 to 5% by mass. This can improve the electrical conductivity of the metal oxide.

Examples of the carbon include graphite, amorphous carbon, diamond-like carbon, carbon nanotube, and composites of these. Highly crystalline graphite has high electrical conductivity and is excellent in adhesion to a negative electrode current collector made of a metal such as copper and in voltage flatness. On the other hand, amorphous carbons having a low crystallinity exhibit relatively small volume expansion, and therefore have effect of highly relaxing the volume expansion of the whole negative electrode, and hardly undergo the degradation due to nonuniformity such as crystal grain boundaries and defects.

Metals and metal oxides are characterized by having much larger lithium accepting capacity than carbon. Therefore, by using a large amount of metal and metal oxide as the negative electrode active material, the energy density of the battery can be improved. In the present invention, it is preferable that the content ratio of the metal and/or the metal oxide in the negative electrode active material is high in order to attain a high energy density, and the metal and/or metal oxide is included in the negative electrode so that the acceptable amount of lithium in the carbon contained in the negative electrode is less than the releasable amount of lithium from the positive electrode. In the present specification, the releasable amount of lithium of the positive electrode and the acceptable amount of lithium of the carbon contained in the negative electrode mean respective theoretical capacities. The ratio of the acceptable amount of lithium in the carbon contained in the negative electrode to the releasable amount of lithium from the positive electrode is preferably 0.95 or less, more preferably 0.9 or less, and still more preferably 0.8 or less. As the amount of the metal and/or the metal oxide increases, the capacity of the negative electrode as a whole increases, and is therefore preferred. The metal and/or metal oxide are contained in the negative electrode active material in an amount of preferably 0.01% by mass or more, more preferably 0.1% by mass or more, and still more preferably 1% by mass or more. However, the volume change of metal and/or metal oxide during absorption and desorption of lithium is larger than carbon, which may cause loss of electrical connection. Therefore, the amount thereof is 99% by mass or less, preferably 90 % by mass or less, and more preferably 80 % by mass or less. As described above, the negative electrode active material is a material capable of reversibly absorbing and desorbing lithium ions with charge and discharge in the negative electrode, and does not include other materials such as binders and the like.

Examples of the negative electrode binder include polyvinylidene fluoride, vinylidene fluoride-hexafluoropropylene copolymer, vinylidene fluoride-tetrafluoroethylene copolymer, polytetrafluoroethylene, polypropylene, polyethylene, acrylic resin, polyimide, polyamideimide and the like. In addition to the above, styrene butadiene rubber (SBR) and the like can be used. When an aqueous binder such as an SBR emulsion is used, a thickener such as carboxymethyl cellulose (CMC) can also be used. The amount of the negative electrode binder is preferably 0.5 to 20 mass% based on the total mass of the negative electrode active material, from the viewpoint of the sufficient binding strength and the high energy density being in a trade-off relation with each other. The above-mentioned binder for a negative electrode may be mixed and used.

The negative electrode active material may be used together with a conductive assisting agent. Specific examples of the conductive assisting agent are the same as those specifically exemplified in the positive electrode, and the usage amount thereof may be the same.

As the negative electrode current collector, from the viewpoint of electrochemical stability, aluminum, nickel, copper, silver, and alloys thereof are preferred. As the shape thereof, foil, flat plate, mesh and the like are exemplified.

Examples of a method for forming the negative electrode active material layer include a doctor blade method, a die coater method, a CVD method, a sputtering method, and the like. It is also possible that, after forming the negative electrode active material layer in advance, a thin film of aluminum, nickel or an alloy thereof may be formed by a method such as vapor deposition, sputtering or the like to obtain a negative electrode current collector.

<Positive electrode>

The positive electrode includes a positive electrode active material capable of reversibly absorbing and desorbing lithium ions with charge and discharge and it has a structure in which the positive electrode active material is laminated on a current collector as a positive electrode active material layer integrated by a positive electrode binder. In the present invention, the positive electrode has a charge capacity per unit area of 3 mAh/cm$^2$ or more, preferably 3.5 mAh/cm$^2$ or more. Further, from the viewpoint of safety and the like, the charge capacity per unit area of the positive electrode is preferably 15 mAh/cm$^2$ or less. Here, the charge capacity per unit area is calculated from the theoretical capacity of active materials. That is, the charge capacity of the positive electrode per unit area is calculated by (theoretical capacity of the positive electrode active material used for the positive electrode) / (area of the positive electrode). The area of the positive electrode refers to the area of one surface, not the both surfaces of the positive electrode.

Therefore, in order to increase the energy density of the positive electrode, the positive electrode active material used for the positive electrode is preferably a compound absorbing and desorbing lithium and having a higher capacity. Examples of the high capacity compound include lithium nickel composite oxides in which a part of the Ni of lithium nickelate ($LiNiO_2$) is replaced by another metal element, and layered lithium nickel composite oxides represented by the following formula (A) are preferred.

$$Li_yNi_{(1-x)}M_xO_2 \qquad (A)$$

wherein $0 \leq x < 1$, $0 < y \leq 1.2$, and M is at least one element selected from the group consisting of Co, Al, Mn, Fe, Ti, and B.

As the compound represented by the formula (A), it is preferred that the content of Ni is high, that is, x is less than 0.5, further preferably 0.4 or less in the formula (A). Examples of such compounds include $Li_\alpha Ni_\beta Co_\gamma Mn_\delta O_2$ ($1 \leq \alpha \leq 1.2$, $\beta + \gamma + \delta = 1$, $\beta \geq 0.7$, and $\gamma \leq 0.2$) and $Li_\alpha Ni_\beta Co_\gamma Al_\delta O_2$ ($1 \leq \alpha \leq 1.2$, $\beta + \gamma + \delta = 1$, $\beta \geq 0.7$, and $\gamma \leq 0.2$) and particularly include $LiNi_\beta Co_\gamma Mn_\delta O_2$ ($0.75 \leq \beta \leq 0.85$, $0.05 \leq \gamma \leq 0.15$, and $0.10 \leq \delta \leq 0.20$). More specifically, for example, $LiNi_{0.8}Co_{0.05}Mn_{0.15}O_2$, $LiNi_{0.8}Co_{0.1}Mn_{0.1}O_2$, $LiNi_{0.8}Co_{0.15}Al_{0.05}O_2$, and $LiNi_{0.8}Co_{0.1}Al_{0.1}O_2$ may be preferably used.

From the viewpoint of thermal stability, it is also preferred that the content of Ni does not exceed 0.5, that is, x is 0.5 or more in the formula (A). In addition, it is also preferred that particular transition metals do not exceed half. Examples of such compounds include $Li_\alpha Ni_\beta Co_\gamma Mn_\delta O_2$ ($1 \leq \alpha \leq 1.2$, $\beta + \gamma + \delta = 1$, $0.2 \leq \beta \leq 0.5$, $0.1 \leq \gamma \leq 0.4$, and $0.1 \leq \delta \leq 0.4$). More specific examples may include $LiNi_{0.4}Co_{0.3}Mn_{0.3}O_2$ (abbreviated as NCM433), $LiNi_{1/3}Co_{1/3}Mn_{1/3}O_2$, $LiNi_{0.5}Co_{0.2}Mn_{0.3}O_2$ (abbreviated as NCM523), and $LiNi_{0.5}Co_{0.3}Mn_{0.2}O_2$ (abbreviated as NCM532) (also including those in which the content of each transition metal fluctuates by about 10% in these compounds).

In addition, two or more compounds represented by the formula (A) may be mixed and used, and, for example, it is also preferred that NCM532 or NCM523 and NCM433 are mixed in the range of 9:1 to 1:9 (as a typical example, 2:1) and used. Further, by mixing a material in which the content of Ni is high (x is 0.4 or less in the formula (A)) and a material in which the content of Ni does not exceed 0.5 (x is 0.5 or more, for example, NCM433), a battery having high capacity and high thermal stability can also be formed.

Examples of the positive electrode active materials other than the above include lithium manganate having a layered structure or a spinel structure such as $LiMnO_2$, $Li_xMn_2O_4$ ($0<x<2$), $Li_2MnO_3$, and $Li_xMn_{1.5}Ni_{0.5}O_4$ ($0<x<2$); $LiCoO_2$ or materials in which a part of the transition metal in this material is replaced by other metal(s); materials in which Li is excessive as compared with the stoichiometric composition in these lithium transition metal oxides; materials having olivine structure such as $LiFePO_4$, and the like. In addition, materials in which a part of elements in these metal oxides is substituted by Al, Fe, P, Ti, Si, Pb, Sn, In, Bi, Ag, Ba, Ca, Hg, Pd, Pt, Te, Zn, La are also usable. The positive electrode active materials described above may be used alone or in combination of two or more.

As the positive electrode binder, the same binder as the negative electrode binder can be used. Among them, polyvinylidene fluoride or polytetrafluoroethylene is preferable from the viewpoint of versatility and low cost, and polyvinylidene fluoride is more preferable. The amount of the positive electrode binder is preferably 2 to 10 parts by mass based on 100 parts by mass of the positive electrode active material, from the viewpoint of the binding strength and energy density that are in a trade-off relation with each other.

For the coating layer containing the positive electrode active material, a conductive assisting agent may be added for the purpose of lowering the impedance. Examples of the conductive assisting agent include flake-like, soot, and fibrous carbon fine particles and the like, for example, graphite, carbon black, acetylene black, vapor grown carbon fibers (for example, VGCF manufactured by Showa Denko) and the like.

As the positive electrode current collector, the same material as the negative electrode current collector can be used. In particular, as the positive electrode, a current collector using aluminum, an aluminum alloy, or iron-nickel-chromium-molybdenum based stainless steel is preferable.

Similar to the negative electrode, the positive electrode may be prepared by forming a positive electrode active material layer containing a positive electrode active material and a binder for positive electrode on a positive electrode current collector.

<Electrolyte solution>

The electrolyte solution of the lithium ion secondary battery according to the present embodiment is not particularly limited, but is preferably a nonaqueous electrolyte solution containing a nonaqueous solvent and a supporting salt that are stable at the operating potential of the battery.

Examples of nonaqueous solvents include aprotic organic solvents, for examples, cyclic carbonates such as propylene carbonate (PC), ethylene carbonate (EC) and butylene carbonate (BC); open-chain carbonates such as dimethyl carbonate (DMC), diethyl carbonate (DEC), ethyl methyl carbonate (EMC) and dipropyl carbonate (DPC); aliphatic carboxylic acid esters such as propylene carbonate derivatives, methyl formate, methyl acetate and ethyl propionate; ethers such as diethyl ether and ethyl propyl ether; phosphoric acid esters such as trimethyl phosphate, triethyl phosphate, tripropyl phosphate, trioctyl phosphate and triphenyl phosphate; and fluorinated aprotic organic solvents obtainable by substituting at least a part of the hydrogen atoms of these compounds with fluorine atom(s), and the like.

In a secondary battery containing a metal or a metal oxide in a negative electrode, the surface area thereof increases due to deterioration and collapse of them, promoting a decomposition of an electrolyte solution in some cases. The gas generated by the decomposition of the electrolyte solution is one of the factors inhibiting the absorption of lithium ions in a negative electrode. Therefore, in a lithium ion secondary battery containing a large amount of metal and/or metal oxide in a negative electrode as in the present invention, preferable solvents are those having high oxidation resistance and difficult to decompose. Examples of solvents having high oxidation resistance include fluorinated aprotic organic solvents such as fluorinated ethers and fluorinated phosphate esters.

Other than these, additionally particularly preferred solvents include cyclic or open-chain carbonates such as ethylene carbonate (EC), propylene carbonate (PC), butylene carbonate (BC), dimethyl carbonate (DMC), diethyl carbonate (DEC), ethyl methyl carbonate (MEC), dipropyl carbonate (DPC) and the like.

Nonaqueous solvent may be used alone, or in combination of two or more.

The examples of lithium salts include $LiPF_6$, $LiAsF_6$, $LiAlCl_4$, $LiClO_4$, $LiBF_4$, $LiSbF_6$, $LiCF_3SO_3$, $LiC_4F_9SO_3$, $LiC(CF_3SO_2)_3$, $LiN(CF_3SO_2)_2$ and the like. Supporting salts may be used alone or in combination of two or more. From the viewpoint of cost reduction, $LiPF_6$ is preferable.

The electrolyte solution may further contain additives. The additive is not particularly limited, and examples thereof include halogenated cyclic carbonates, unsaturated cyclic carbonates, cyclic or open-chain disulfonic acid esters, and the like. The addition of these compounds improves battery characteristics such as cycle characteristics. This is presumably because these additives decompose during charging and discharging of the lithium ion secondary battery to form a film on the surface of the electrode active material and inhibit decomposition of the electrolyte solution and supporting salt. In the present invention, the cycle characteristics may be further improved by additives in some cases.

<Method for producing lithium ion secondary battery>

The lithium ion secondary battery according to the present embodiment can be manufactured according to conventional method. An example of a method for manufacturing a lithium ion secondary battery will be described taking a stacked laminate type lithium ion secondary battery as an example. First, in the dry air or an inert atmosphere, the positive electrode and the negative electrode are placed to oppose to each other via a separator to form the above-mentioned electrode element. Next, this electrode element is accommodated in an outer package (container), an electrolyte solution is injected, and the electrode is impregnated with the electrolyte solution. Thereafter, the opening of the outer package is sealed to complete the lithium ion secondary battery. Here, a battery having a stacked structure is one of preferable forms in which the present invention can achieve a large advantageous effect, because the deformation of the separator due to thermal shrinkage of the base material is eminent.

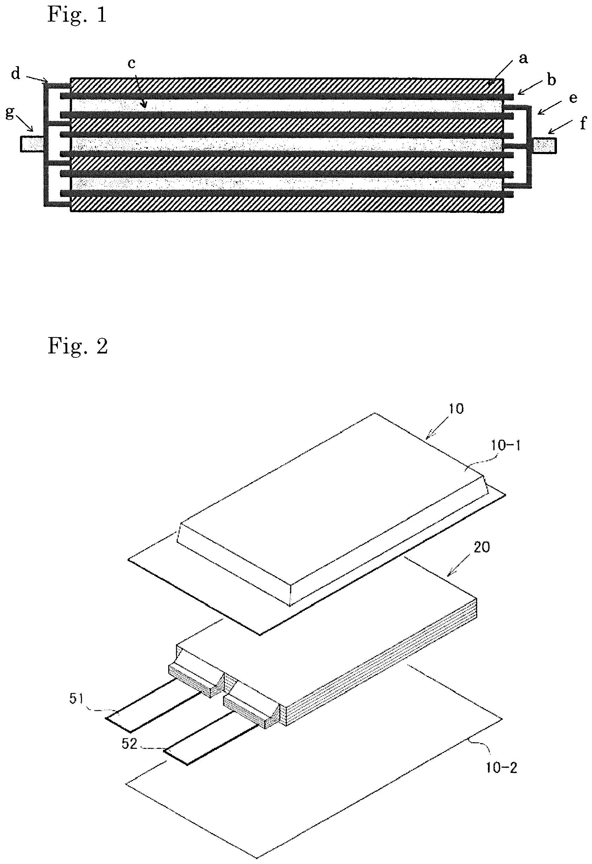

Fig. 1 is a schematic cross-sectional view showing a structure of an electrode element included in a stacked laminate lithium ion secondary battery. In this electrode element, one or more positive electrodes c and one or more negative electrodes a are alternately stacked with the separator b sandwiched therebetween. The positive electrode current collector e of each positive electrode c is welded to each other at its end part which is not covered with the positive electrode active material layer to form an electrical connection, and the positive electrode terminal f is further welded to the welded portion. The negative electrode current collector d of each negative electrode a is welded to each other at its end part which is not covered with the negative electrode active material layer to form an electrical connection, and the negative electrode terminal g is further welded to the welded portion.

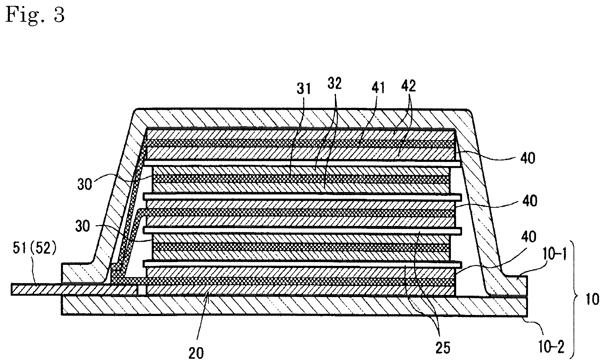

As another embodiment, a secondary battery having a structure as shown in Fig. 2 and Fig. 3 may be provided. This secondary battery comprises a battery element 20, a film package 10 housing the battery element 20 together with an electrolyte, and a positive electrode tab 51 and a negative electrode tab 52 (hereinafter these are also simply referred to as "electrode tabs").

In the battery element 20, a plurality of positive electrodes 30 and a plurality of negative electrodes 40 are alternately stacked with separators 25 sandwiched therebetween as shown in Fig. 3. In the positive electrode 30, an electrode material 32 is applied to both surfaces of a metal foil 31, and also in the negative electrode 40, an electrode material 42 is applied to both surfaces of a metal foil 41 in the same manner.

In the secondary battery in Fig. 1, the electrode tabs are drawn out on both sides of the package, but a secondary battery of the present invention may have an arrangement in which the electrode tabs are drawn out on one side of the package as shown in Fig. 2. Although detailed illustration is omitted, the metal foils of the positive electrodes and the negative electrodes each have an extended portion in part of the outer periphery. The extended portions of the negative electrode metal foils are brought together into one and connected to the negative electrode tab 52, and the extended portions of the positive electrode metal foils are brought together into one and connected to the positive electrode tab 51 (see Fig. 3). The portion in which the extended portions are brought together into one in the stacking direction in this manner is also referred to as a "current collecting portion" or the like.

The film package 10 is composed of two films 10-1 and 10-2 in this example. The films 10-1 and 10-2 are heat-sealed to each other in the peripheral portion of the battery element 20 and hermetically sealed. In Fig. 3, the positive electrode tab 51 and the negative electrode tab 52 are drawn out in the same direction from one short side of the film package 10 hermetically sealed in this manner.

Of course, the electrode tabs may be drawn out from different two sides respectively. In addition, regarding the arrangement of the films, in Fig. 2 and Fig. 3, an example in which a cup portion is formed in one film 10-1 and a cup portion is not formed in the other film 10-2 is shown, but other than this, an arrangement in which cup portions are formed in both films (not illustrated), an arrangement in which a cup portion is not formed in either film (not illustrated), and the like may also be adopted.

<Assembled battery>

A plurality of lithium ion secondary batteries according to the present embodiment may be combined to form an assembled battery. The assembled battery may be configured by connecting two or more lithium ion secondary batteries according to the present embodiment in series or in parallel or in combination of both. The connection in series and/or parallel makes it possible to adjust the capacitance and voltage freely. The number of lithium ion secondary batteries included in the assembled battery can be set appropriately according to the battery capacity and output.

<Vehicle>

The lithium ion secondary battery or the assembled battery according to the present embodiment can be used in vehicles. Vehicles according to an embodiment of the present invention include hybrid vehicles, fuel cell vehicles, electric vehicles (besides four-wheel vehicles (cars, trucks, commercial vehicles such as buses, light automobiles, etc.) two-wheeled vehicle (bike) and tricycle), and the like. The vehicles according to the present embodiment is not limited to automobiles, it may be a variety of power source of other vehicles, such as a moving body like a train.

<Power storage equipment>

The lithium ion secondary battery or the assembled battery according to the present embodiment can be used in power storage system. The power storage systems according to the present embodiment include, for example, those which is connected between the commercial power supply and loads of household appliances and used as a backup power source or an auxiliary power in the event of power outage or the like, or those used as a large scale power storage that stabilize power output with large time variation supplied by renewable energy, for example, solar power generation.

Example

<Example 1>

Manufacturing of the battery of this example will be described.

(Positive electrode)

Lithium nickel composite oxide ($LiNi_{0.80}Mn_{0.15}Co_{0.05}O_2$) having a theoretical capacity of 270 mAh/g as a positive electrode active material, carbon black as a conductive assisting agent, and polyvinylidene fluoride as a binder were respectively weighed to have a mass ratio of 90:5:5, and they were kneaded using N-methylpyrrolidone to prepare positive electrode slurry.

The prepared positive electrode slurry was applied to an aluminum foil having a thickness of 20 $\mu$m as a current

collector, dried, and further pressed to obtain a positive electrode. The charge capacity per unit area of this positive electrode was 3 mAh/cm$^2$.

(Negative electrode)

Artificial graphite particles (average particle diameter of 8 $\mu$m) having a theoretical capacity of 370 mAh/g and silicon oxide (SiO) particles (average particle diameter of 5 $\mu$m) having a theoretical capacity of 2676 mAh/g (calculated from a theoretical capacity of Si of 4200 mAh/g) were respectively weighed to have a mass ratio of 99.99:0.01 to prepare a negative electrode active material. The prepared active material mixture, carbon black as a conductive assisting agent and a mixture of styrene-butadiene copolymer rubber: carboxymethyl cellulose in a mass ratio of 1:1 as a binder were respectively weighed to have a mass ratio of 96:1:3, and they were kneaded using distilled water to prepare negative electrode slurry. The prepared negative electrode slurry was applied to a copper foil having a thickness of 15 $\mu$m as a current collector, dried, and further pressed to obtain a negative electrode. The charge capacity per unit area of the carbon material in the negative electrode was 2.85 mAh/cm$^2$.

(Separator)

As a separator, a microporous membrane of aramid (pore size of 0.5 $\mu$m) having a thickness of 20 $\mu$m was used. The Ts of this separator is shown in Table 1.

(Electrode element)

The prepared positive electrode plate was cut into a size of 230 mm x 300 mm excluding the current extraction portion, and the negative electrode plate was cut into a size of 238 mm x 308 mm excluding the current extraction portion, and both were stacked via a separator. End portions of positive electrode current collectors which were not covered with the positive electrode active material and end portions of negative electrode current collectors which are not covered with a negative electrode active material were respectively welded. To the respective welded portions, a positive electrode terminal formed of aluminum and a negative electrode terminal formed of nickel were further welded respectively to obtain an electrode element having a planar stacked structure. The charge capacity of the positive electrode of the battery was 20 Ah.

(Electrolyte solution)

LiPF$_6$ as a supporting salt was added to a mixed solvent of EC (boiling point: 248 °C) and DEC (boiling point: 126 °C.) as a nonaqueous solvent (volume ratio: EC / DEC = 30/70) so as to have a concentration of 1 M in an electrolyte solution, to prepare the electrolyte solution.

(Manufacturing of battery)

A secondary battery was produced by enclosing the electrode element with an aluminum laminate film as an outer package, and injecting an electrolyte solution into the inside of the outer package, and sealing it under a reduced pressure to 0.1 atm.

<Evaluation of secondary battery>

(Battery temperature and overcharge test)

The prepared secondary battery was charged to 4.2 V at 0.2 C and discharged to 3 V at 0.2 C. The highest attained temperature at this time is shown in Table 1. Subsequently, the overcharge test was carried out by charging the battery up to 10 V at 1 C. The surface temperature of the battery reached 95 °C at the voltage of about 5.5 V. Then, the voltage rapidly rose to over 10 V, but the battery did not rupture or smoke. This case is rated as ∞ (very good), the case where a battery emits smoke but does not ignite is rated as ○ (good), and the case where a battery ignites is rated as ✕ (poor).

(Degradation of separator)

The prepared secondary battery was charged to 4.3 V at 0.1 C and discharged to 3 V at 0.1 C, and this was repeated by 100 times. When the prepared battery was disassembled and the surface of the separator was observed under magnification by using a scanning electron microscope, deterioration that the separator has become slightly brown was partially observed, and it was rated as ∘ (good). In addition, when no discoloration is observed, it is rated as ∞ (very good), when the surface is partially brown, it is rated as △ (partially poor), and when the entire surface is brown or black, it is rated as × (poor).

<Example 2>

A battery was prepared and evaluated under the same conditions as in Example 1 except that a microporous polyimide separator (thickness 20 μm, pore size 0.5 μm) was used as a separator. The results are shown in Table 1.

<Example 3>

A battery was prepared and evaluated under the same conditions as in Example 1 except that a microporous polyphenylene sulfide separator (thickness 20 μm, pore size 0.5 μm) was used as a separator. The results are shown in Table 1.

<Example 4>

A battery was prepared and evaluated under the same conditions as in Example 1 except that a microporous chlorinated aramid separator (thickness 20 μm, pore size 0.5 μm) was used as a separator. The results are shown in Table 1.

<Example 5>

A battery was prepared and evaluated as in Example 1, except that the charge capacity per unit area of the negative electrode carbon material was set to 2.7 mAh/cm$^2$. The results are shown in Table 1.

<Example 6>

A battery was prepared and evaluated as in Example 1, except that the charge capacity per unit area of the negative electrode carbon material was set to 2.4 mAh/cm$^2$. The results are shown in Table 1.

<Example 7>

A battery was prepared and evaluated as in Example 1, except that lithium nickel composite oxide ($LiNi_{0.80}Co_{0.15}Al_{0.05}O_2$) having a theoretical capacity of 200 mAh/g was used as a positive electrode active material. The results are shown in Table 1.

<Comparative Example 1>

A battery was prepared and evaluated under the same conditions as in Example 1, except that a microporous polypropylene separator (thickness 20 μm, pore size 0.01 μm) was used as a separator. The results are shown in Table 1.

<Comparative Example 2>

A battery was prepared and evaluated under the same conditions as in Example 1, except that a microporous polypropylene separator (thickness 20 μm, pore size 0.01 μm) coated with a ceramic layer of 3 μm thickness was used as a separator. The results are shown in Table 1.

<Reference Example 3>

A battery was prepared and evaluated under the same conditions as in Example 1, except that a cellulose nonwoven fabric separator (thickness 20 μm, pore size 1 μm) was used as a separator. The results are shown in Table 1.

<Reference Example 4>

A battery was prepared and evaluated under the same conditions as in Example 1, except that an aramid nonwoven fabric separator (thickness: 20 μm, pore size: 1 μm) was used as a separator. The results are shown in Table 1.

<Reference Example 5>

A battery was prepared and evaluated under the same conditions as in Example 1, except that a polyphenylene sulfide nonwoven fabric separator (thickness 20 μm, pore size 1 μm) was used as a separator. The results are shown in Table 1.

<Comparative Example 6>

A battery was prepared and evaluated under the same conditions as in Example 1, except that the discharge capacity per unit area of the positive electrode was set to 2.5 mAh/cm$^2$, the charge capacity per unit area of the carbon material of the negative electrode was set to 2.38 mAh/cm$^2$, and a microporous polypropylene separator (thickness 20 μm, pore size 0.01 μm) coated with a ceramic layer of 3 μm thickness was used as a separator. The results are shown in Table 1.

<Comparative Example 7>

A battery was prepared and evaluated under the same conditions as in Example 1, except that the discharge capacity per unit area of the positive electrode was set to 2.5 mAh/cm$^2$, the charge capacity per unit area of the carbon material of the negative electrode was set to 2.38 mAh/cm$^2$, and a cellulose nonwoven fabric separator (thickness 20 μm, pore size 1 μm) was used as a separator. The results are shown in Table 1.

<Comparative Example 8>

A battery was prepared and evaluated under the same conditions as in Example 1, except that the charge capacity per unit area of the carbon material of the negative electrode was set to 3.3 mAh/cm$^2$, and a microporous polypropylene separator (thickness 20 μm, pore size 0.01 μm) coated with a ceramic layer of 3 μm thickness was used as a separator. The results are shown in Table 1.

<Comparative Example 9>

A battery was prepared and evaluated under the same conditions as in Example 1, except that the size of the battery such as the positive electrode and the negative electrode was reduced so that the charge capacity of the positive electrode of the battery is to be 17 Ah and a microporous polypropylene separator (thickness 20 μm, pore size 0.01 μm) coated with a ceramic layer of 3 μm thickness was used as a separator. The results are shown in Table 1.

<Comparative Example 10>

A battery was prepared and evaluated under the same conditions as in Example 7, except that a microporous polypropylene separator (thickness 20 μm, pore size 0.01 μm) was used as a separator. The results are shown in Table 1.

From the results of Reference Examples 3, 4, and 5, it can be understood that in the case of using a nonwoven fabric type separator, the battery temperature at the time of charging becomes higher to such an extent that it exceeds 30 °C, and therefore that a micro short circuit tends to occur and the stability of the battery deteriorates. When the charge capacity per unit area of the positive electrode is lowered to 2.5 mAh/cm$^2$, the battery temperature rise disappears even though the nonwoven fabric was used, as shown in Comparative Example 7. However, since the energy density is lowered, batteries having high energy density cannot be produced. In Reference Examples 4 and 5, aramid resin or polyphenylene sulfide resin with high oxygen index are used, and therefore ignition did not occur while emission of smoke was observed. When a microporous type separator is used as in Comparative Examples 1 and 2, the temperature rise at the time of charging disappears. However, when a significant overcharge happens, in the case of a material having a low heat resistance, which has a low melting point and shrinks readily, an internal short circuit occurs, leading to ignition. In contrast, as in Comparative Examples 6 to 9, it is possible to prevent ignition during overcharge by (i) reducing the charging capacity per unit area of the positive electrode to 2.5 mAh/cm$^2$, (ii) increasing the ratio of the charge capacity per unit area of the negative electrode carbon, or (iii) reducing the capacity of a battery. However, they are not preferable for improving energy density. Examples 1 to 4 are examples in which separators formed of a resin having a high melting point, having a microporous structure and having a low thermal shrinkage coefficient were used, and none of the Examples show a temperature rise during charging, and emission of smoke or ignition by overcharging. In Examples 5 to 6, despite that the ratio of the chargeable capacity per unit area of the negative electrode carbon material was lowered, the temperature rise of the batteries hardly occurred. The insulation property (Ts) of the separators used in Examples were 5 μm or more, and ignition did not occur in all Examples. In Comparative Examples 6, 8 and 9 which have a ceramic coating of 3 $\mu$m, ignition did not occur. In the case of Comparative Example 2, it is presumed that a short circuit occurred firstly due to shrinkage, leading to ignition. The same result was obtained in Comparative Example 7 (aramid separator) and Comparative Example 10 (microporous polypropylene separator coated with ceramic layer), in which the active material was changed from $LiNi_{0.80}Mn_{0.15}Co_{0.05}O_2$ to $LiNi_{0.80}Co_{0.15}Al_{0.05}O_2$. Namely, the separator with low shrinking property at high temperature was excellent in overcharging resistance.

[Table 1]

| | Capacity ratio [1)] | Capacity of positive electrode mAh/cm² | Battery capacity Ah | Separator Form | Separator Material | Insulation property Ts (pm) | Battery temperature during charging °C | Overcharging test | Deterioration |
|---|---|---|---|---|---|---|---|---|---|
| Example 1 | 0.95 | 3.0 | 20 | Microporous | Aramid | 10 | 25 | ◎ | ○ |
| Example 2 | 0.95 | 3.0 | 20 | Microporous | Polyimide | 20 | 25 | ◎ | ○ |
| Example 3 | 0.95 | 3.0 | 20 | Microporous | PPS | 5 | 25 | ◎ | ○ |
| Example 4 | 0.95 | 3.0 | 20 | Microporous | Chlorinated aramid | 10 | 25 | ◎ | ◎ |
| Example 5 | 0.9 | 3.0 | 20 | Microporous | Aramid | 10 | 27 | ◎ | ○ |
| Example 6 | 0.8 | 3.0 | 20 | Microporous | Aramid | 10 | 30 | ◎ | ○ |
| Example 7 | 0.95 | 3.0 | 20 | Microporous | Aramid | 10 | 25 | ◎ | ○ |
| Comparative Example 1 | 0.95 | 3.0 | 20 | Microporous | PP | 1 | 25 | × | △ |
| Comparative Example 2 | 0.95 | 3.0 | 20 | Microporous | PP + $Al_2O_3$ | 3 | 25 | × | △ |
| Reference Example 3 | 0.95 | 3.0 | 20 | Nonwoven fabric | Cellulose | 2 | 40 | × | ◎ |
| Reference Example 4 | 0.95 | 3.0 | 20 | Nonwoven fabric | Aramid | 10 | 40 | ○ | ○ |
| Reference Example 5 | 0.95 | 3.0 | 20 | Nonwoven fabric | PPS | 5 | 40 | ○ | ○ |
| Comparative Example 6 | 0.95 | 2.5 | 20 | Microporous | PP + $Al_2O_3$ | 3 | 25 | ◎ | △ |
| Comparative Example 7 | 0.95 | 2.5 | 20 | Nonwoven fabric | Cellulose | 2 | 30 | × | ◎ |
| Comparative Example 8 | 1.1 | 3.0 | 20 | Microporous | PP + $Al_2O_3$ | 3 | 25 | ◎ | △ |

| | | | | | | | | | |
|---|---|---|---|---|---|---|---|---|---|
| Comparative Example 9 | 0.95 | 3.0 | 17 | Microporous | PP + Al$_2$O$_3$ | 3 | 25 | ○○ | △ |
| Comparative Example 10 | 0.95 | 3.0 | 20 | Microporous | PP | 1 | 25 | × | △ |
| 1) denotes (theoretical acceptable amount of lithium in a carbon in a negative electrode)/(theoretical releasable amount of lithium from a positive electrode) | | | | | | | | | |

Industrial Applicability

The battery according to the present invention can be utilized in, for example, all the industrial fields requiring a power supply and the industrial fields pertaining to the transportation, storage and supply of electric energy. Specifically, it can be used in, for example, power supplies for mobile equipment such as cellular phones and notebook personal computers; power supplies for electrically driven vehicles including an electric vehicle, a hybrid vehicle, an electric motorbike and an electric-assisted bike, and moving/transporting media such as trains, satellites and submarines; backup power supplies for UPSs; and electricity storage facilities for storing electric power generated by photovoltaic power generation, wind power generation and the like.

Explanation of Reference

a negative electrode
b separator
c positive electrode
d negative electrode current collector
e positive electrode current collector
f positive electrode terminal
g negative electrode terminal
10 film package
20 battery element
25 separator
30 positive electrode
40 negative electrode

**Claims**

1. A lithium ion secondary battery comprising a positive electrode, a negative electrode, an electrolyte solution, and a separator disposed between the positive electrode and the negative electrode, wherein

   the positive electrode has a charge capacity per unit area of 3 mAh/cm$^2$ or more,
   the negative electrode comprises a metal and/or a metal oxide and a carbon as negative electrode active materials,
   the acceptable amount of lithium in the carbon in the negative electrode is less than the releasable amount of lithium from the positive electrode, and
   the separator is a microporous membrane having a pore size of 0.5 $\mu$m or less, and formed of one or more materials selected from polyimide resins, polyamide resins and polyphenylene sulfide resins.

2. The lithium ion secondary battery according to claim 1, wherein the separator retains a thickness of the insulating layer of 5 $\mu$m or more at 400 °C.

3. The lithium ion secondary battery according to claim 2, wherein the separator is formed of aramid resins.

4. The lithium ion secondary battery according to claim 3, wherein a part or all of hydrogen on an aromatic ring of the aramid resin is substituted with halogen.

5. A vehicle comprising the lithium ion secondary battery according to any one of claims 1 to 4 mounted thereon.

6. A power storage system using the lithium ion secondary battery according to any one of claims 1 to 4.

7. A method of manufacturing a lithium ion secondary battery having an electrode element, an electrolyte solution, and an outer package, the method comprising the steps of:

   preparing the electrode element by arranging a positive electrode and a negative electrode so as to face each other with a separator interposed therebetween; and

enclosing the electrode element and the electrolyte solution in an outer package;
wherein,
the positive electrode has a charge capacity per unit area of 3 mAh/cm$^2$ or more,
the negative electrode comprises a metal and/or a metal oxide and a carbon as negative electrode active materials,
the acceptable amount of lithium in the carbon in the negative electrode is less than the releasable amount of lithium from the positive electrode, and
the separator is a microporous membrane having a pore size of 0.5 $\mu$m or less, and formed of one or more materials selected from polyimide resins, polyamide resins and polyphenylene sulfide resins.

**Patentansprüche**

1.  Lithium-Ionen-Sekundärbatterie mit einer positiven Elektrode, einer negativen Elektrode, einer Elektrolytlösung und einem zwischen der positiven Elektrode und der negativen Elektrode angeordneten Separator, wobei

    die positive Elektrode eine Ladekapazität pro Flächeneinheit von 3 mAh/cm$^2$ oder mehr aufweist,
    die negative Elektrode ein Metall und/oder ein Metalloxid und einen Kohlenstoff als aktive Materialien der negativen Elektrode aufweist,
    die zulässige Menge an Lithium im Kohlenstoff in der negativen Elektrode geringer ist als die aus der positiven Elektrode freisetzbare Menge an Lithium, und
    der Separator eine mikroporöse Membran mit einer Porengröße von 0,5 $\mu$m oder weniger ist, die aus einem Material oder mehreren Materialien ausgebildet ist, das/die aus Polyimidharzen, Polyamidharzen und Polyphenylensulfidharzen ausgewählt ist/sind.

2.  Lithium-Ionen-Sekundärbatterie nach Anspruch 1, wobei der Separator bei 400°C eine Dicke der Isolierschicht von 5 $\mu$m oder mehr beibehält.

3.  Lithium-Ionen-Sekundärbatterie nach Anspruch 2, wobei der Separator aus Aramidharzen ausgebildet ist.

4.  Lithium-Ionen-Sekundärbatterie nach Anspruch 3, wobei ein Teil des Wasserstoffs oder der gesamte Wasserstoff auf einem aromatischen Ring des Aramidharzes durch Halogen ersetzt ist.

5.  Fahrzeug mit der darin montierten Lithium-Ionen-Sekundärbatterie nach einem der Ansprüche 1 bis 4.

6.  Energiespeichersystem unter Verwendung der Lithium-Ionen-Sekundärbatterie nach einem der Ansprüche 1 bis 4.

7.  Verfahren zum Herstellen einer Lithium-Ionen-Sekundärbatterie mit einem Elektrodenelement, einer Elektrolytlösung und einer äußeren Verpackung, wobei das Verfahren die Schritte aufweist:

    Herstellen des Elektrodenelements durch Anordnen einer positiven Elektrode und einer negativen Elektrode derart, dass sie einander zugewandt sind, wobei ein Separator dazwischen angeordnet ist; und
    Einschließen des Elektrodenelements und der Elektrolytlösung in einer äußeren Verpackung, wobei
    die positive Elektrode eine Ladekapazität pro Flächeneinheit von 3 mAh/cm$^2$ oder mehr aufweist,
    die negative Elektrode ein Metall und/oder ein Metalloxid und einen Kohlenstoff als aktive Materialien der negativen Elektrode aufweist,
    die zulässige Menge an Lithium im Kohlenstoff in der negativen Elektrode geringer ist als die aus der positiven Elektrode freisetzbare Menge an Lithium, und
    der Separator eine mikroporöse Membran mit einer Porengröße von 0,5 $\mu$m oder weniger ist, die aus einem Material oder mehreren Materialien ausgebildet ist, das/die aus Polyimidharzen, Polyamidharzen und Polyphenylensulfidharzen ausgewählt ist/sind.

**Revendications**

1.  Batterie secondaire au lithium-ion comprenant une électrode positive, une électrode négative, une solution d'électrolyte, et un séparateur disposé entre l'électrode positive et l'électrode négative, dans laquelle

l'électrode positive présente une capacité de charge par unité de surface de 3 mAh/cm$^2$ ou plus, l'électrode négative comprend un métal et/ou un oxyde métallique et un carbone en tant que matériaux actifs d'électrode négative, la quantité acceptable de lithium dans le carbone dans l'électrode négative est inférieure à la quantité libérable de lithium à partir de l'électrode positive, et le séparateur est une membrane microporeuse ayant une taille de pore de 0,5 $\mu$m ou moins, et formé d'un ou de plusieurs matériaux sélectionnés parmi les résines de polyimide, les résines de polyamide et les résines de polysulfure de phénylène.

2. Batterie secondaire au lithium-ion selon la revendication 1, dans laquelle le séparateur conserve une épaisseur de la couche isolante de 5 $\mu$m ou plus à 400 °C.

3. Batterie secondaire au lithium-ion selon la revendication 2, dans laquelle le séparateur est formé de résines aramides.

4. Batterie secondaire au lithium-ion selon la revendication 3, dans laquelle une partie ou la totalité des hydrogènes sur un cycle aromatique de la résine aramide est remplacée par un halogène.

5. Véhicule comprenant la batterie secondaire au lithium-ion selon l'une quelconque des revendications 1 à 4 montée sur celui-ci.

6. Système de stockage d'énergie utilisant la batterie secondaire au lithium-ion selon l'une quelconque des revendications 1 à 4.

7. Procédé de fabrication d'une batterie secondaire au lithium-ion ayant un élément d'électrodes, une solution d'électrolyte, et un boîtier externe, le procédé comprenant les étapes suivantes :

la préparation de l'élément d'électrodes en agençant une électrode positive et une électrode négative l'une en face de l'autre avec un séparateur interposé entre elles ; et l'enfermement de l'élément d'électrodes et de la solution d'électrolyte dans un boîtier externe ; dans lequel, l'électrode positive présente une capacité de charge par unité de surface de 3 mAh/cm$^2$ ou plus, l'électrode négative comprend un métal et/ou un oxyde métallique et un carbone en tant que matériaux actifs d'électrode négative, la quantité acceptable de lithium dans le carbone dans l'électrode négative est inférieure à la quantité libérable de lithium à partir de l'électrode positive, et le séparateur est une membrane microporeuse ayant une taille de pore de 0,5 $\mu$m ou moins, et formé d'un ou de plusieurs matériaux sélectionnés parmi les résines de polyimide, les résines de polyamide et les résines de polysulfure de phénylène.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008153117 A
- JP 2013101921 A
- US 2014030595 A1
- JP 2007305574 A
- JP 2009037944 A
- US 2011159347 A1